# EUROPÄISCHE PATENTSCHRIFT

(11) **EP 1 407 907 B1**
(45) Veröffentlichungstag und Bekanntmachung des Hinweises auf die Patenterteilung: **28.02.2007**
(21) Anmeldenummer: 02292464.1
(22) Anmeldetag: 07.10.2002
(51) Int. Cl.: B60H 1/22, H05B 3/18, F24H 9/18

(54) **Vorrichtung zum Austausch von Wärme**
Heat exchange device
Dispositif d'échange de chaleur

(43) Veröffentlichungstag der Anmeldung: 14.04.2004
(73) Patentinhaber: Behr GmbH & Co. KG, 70469 Stuttgart (DE); Behr France Rouffach SAS, 68250 Rouffach (FR)
(72) Erfinder: Brun, Michel, 68740 Rustenhart (FR); Laumonnerie, Yannick, 68250 Rouffach (FR); Lucas, Grégory, 68250 Rouffach (FR); Miss, Pascal, 67600 Sélestat (FR); Mougey, Mathieu, 68190 Ensisheim (FR); Shmittheisler, Christophe, 67680 Epfig (FR); Otto, Jürgen, Dipl.-Ing.(FH), 75428 Illingen (DE)
(74) Vertreter: Grauel, Andreas

(56) Entgegenhaltungen:
- WO-A-00/43225
- DE-A- 19 804 496
- DE-A- 19 933 013
- DE-C- 10 032 099
- US-A- 4 425 497
- US-A- 5 093 898
- US-A- 5 451 747

## Beschreibung

Die Erfindung betrifft eine Vorrichtung zum Austausch von Wärme, insbesondere eine elektrische Heizvorrichtung und insbesondere eine elektrische Heizvorrichtung für ein Kraftfahrzeug.

Derartige Vorrichtungen zum Austausch von Wärme werden beispielsweise zum Beheizen von Luft verwendet.

Die Beschreibung der Erfindung und der ihr zugrundeliegenden technischen Probleme erfolgt in der vorliegenden Anmeldung am Beispiel einer elektrischen Heizvorrichtung zum Beheizen des Innenraums eines Kraftfahrzeuges. Es wird aber darauf hingewiesen, dass diese beispielhaft ist und die erfindungsgemässe Vorrichtung auch für andere Anwendungszwecke geeignet ist.

Aus dem Stand der Technik sind Heizvorrichtungen zum Beheizen von Luft für den Einsatz in einem Kraftfahrzeug bekannt, welche Wärmequellen und Wärmeleiter aufweisen. Die Wärmeleiter dienen dabei dem Zweck, ein an ihnen vorbeiströmendes Medium, insbesondere Luft, zu erwärmen.

Es ist ferner bekannt, mehrere Heizelemente, welche Wärmeleiter und Wärmequellen aufweisen, zu einem Heizblock zusammenzusetzen. Ein derartiger Heizblock kann in einem Rahmen gehalten werden.

Eine Vorrichtung gemäß dem Oberbegriff des Anspruchs 1 wird in DE 19933013 offenbart.

Der vorliegenden Erfindung liegt die Aufgabe zugrunde, eine verbesserte Wärmeübertragung von den Heizelementen auf das zu erwärmende Medium zu erreichen.

Die Aufgabe wird durch eine Vorrichtung gemäss Anspruch 1 gelöst.

Eine erfindungsgemässe Vorrichtung zum Austausch von Wärme, insbesondere für ein Kraftfahrzeug, weist wenigstens eine Wärmetauscherbaugruppe auf, wobei diese Wärmetauscherbaugruppe mehrere erste Komponenten aufweist, welche von einem elektrischen Strom durchflossen werden, und deren Temperatur sich in Abhängigkeit des durch die Komponente fliessenden Stroms ändert, und wobei diese erste Komponente derart gestaltet sind, dass sie dazu geeignet sind, ein sie umströmendes Medium zu erwärmen, und wobei der Stromfluss durch einzelne erste Komponenten separat zu- bzw. abgeschaltet wird, wodurch eine Steuerung der Heizleistung der Vorrichtung zum Austausch von Wärme gesteuert, insbesondere die Heizleistung reguliert werden kann.

Dabei ist wenigstens eine zweite Komponente vorgesehen, welche aus wenigstens zwei Teileinheiten besteht, und beide Teileinheiten die erste Komponente derartig kontaktieren, dass elektrische Ladungsträger zwischen der ersten und der zweiten Komponente ausgetauscht werden. Dabei ist diese Berührung dergestalt ausgeführt, dass durch diese Berührung der Komponenten der Austausch von thermischer und/oder elektrischer Energie begünstigt wird. Dabei ist wenigstens eine Teileinheit der zweiten Komponente wenigstens teilweise, bevorzugt im wesentlichen von der ersten Komponente umgeben, insbesondere umspritzt.

Bevorzugte Ausführungsformen der erfindungsgemässen Vorrichtung zum Austausch von Wärme sind Gegenstand der Unteransprüche.

Unter dem Begriff "Heizelement" im Sinne der vorliegenden Erfindung wird im ein Element oder eine Gruppe von Elementen verstanden, durch welche elektrische Energie in Wärmeenergie umgewandelt wird das wenigstens teilweise aus einem Kunststoffmaterial mit PTC-Eigenschaften hergestellt ist.

In einer bevorzugten Ausführungsform ist die erste Komponente wenigstens teilweise aus einem Material aus einer Gruppe von Materialien, insbesondere Kunststoffen hergestellt, welche insbesondere PP (Polypropylen) mit Russ, EVA (Ethyl Vinyl Acetat) mit Russ, PE (Polyethylen), insbesondre HDPE (High Density Polyethylen) oder LDPE (Low Density Polyethylen) oder dergleichen enthält. In einer bevorzugten Ausführunsform können auch Mischungen aus verschiedenen Polyolefinen verwendet werden.

Bevorzugt weist das Material der ersten Komponente elektrisch leitende Partikel, wie insbesondere Leitruss oder Kleinmetalleinlagen auf. Diese Partikel weisen besonders bevorzugt eine sphärische Geometrie auf, um günstigere PTC Eigenschaften zu erreichen. Der prozentuale Anteil der leitenden Partikel ist dabei vorgegeben.

Die Vorteile des verwendeten Materials, insbesondere Kunststoffe liegen darin, dass diese Kunststoffe zum Umspritzen anderer Materialien verwendet werden können und dass diese Kunststoffe auch noch bei Temperaturen bis 120° C über eine ausreichende mechanische Festigkeit verfügen.

Der spezifische Widerstand des Materials bei 0° C liegt zwischen 1 Ohm*cm, und 300 Ohm*cm, bevorzugt zwischen 100 Ohm*cm und 200 Ohm*cm und besonders bevorzugt bei ca. 160 Ohm*cm.

In der beanspruchten Ausführungsform ist die erste Komponente wenigstens teilweise mit den als Kontaktbleche ausgebildeten Teileinheiten der zweiten Komponente flächig verbunden. Unter einer flächigen Verbindung wird dabei verstanden, dass die einzelnen Komponenten nicht nur an einzelnen Punkten verbunden sind, sondern sich die Verbindung über einen wesentlichen Bereich wenigstens einer Oberfläche wenigstens einer Komponente erstreckt. Alternativ käme jedoch auch eine punktuelle Verbindung, in Betracht, d.h. eine Verbindung, die auf einen eng abgegrenzten Raum bzw. eine eng abgegrenzte Fläche beschränkt ist. Weiterhin ist es auch möglich, die erste Komponente und die zweite Komponente über ein weiteres Verbindungsmaterial zu verbinden.

In einer weiteren bevorzugten Ausführungsform ist die Wärmetauscherbaugruppe in einer Aufnahmeeinrichtung angeordnet, wodurch deren Stabilität erhöht werden kann.

Vorzugsweise besteht diese Aufnahmeeinrichtung aus nicht stromleitenden Materialien, besonders bevorzugt aus nicht stromleitendem Kunststoff. In einer weiteren sehr bevorzugten Ausführungsform weist die erste Komponente eine rippenartige Form auf. Die einzelnen Rippen sind dabei in einem vorbestimmten Winkel gegenüber der Hauptströmungsrichtung des Mediums ausgerichtet.

Unter der Hauptströmungsrichtung des Mediums wird dabei die Strömungsrichtung verstanden, die das Medium im unmittelbaren Bereich vor und nach der Vorrichtung zum Austausch von Wärme.

Unter einem Medium ist jedes gasförmige oder flüssige Medium, insbesondere Luft; zu verstehen.

In einer weiteren bevorzugten Ausführungsform der Erfindung stehen die Teileinheiten der zweiten Komponente, die mit der ersten Komponente kontaktartig verbunden sind, mit unterschiedlichen Polen einer Stromquelle, insbesondere dem Plus und dem Minuspol der Stromquelle in Verbindung, insbesondere in elektrischer Verbindung, so dass ein Stromfluss durch die erste Komponente unter vorgegebenen Bedingungen stattfinden kann.

In einer weiteren bevorzugten Ausführungsform kann die elektrische Verbindung zwischen wenigstens einer der Teileinheiten der zweiten Komponenten und der Stromquelle unabhängig von der Verbindung zwischen den übrigen Teileinheiten und der Stromquelle unterbrochen und wiederhergestellt werden.

Bevorzugt erfolgt die Unterbrechung und/oder die Wiederherstellung der elektrischen Verbindung zwischen wenigstens einer der Teileinheiten und der Stromquelle durch mechanische Schalteinrichtungen, insbesondere Schalter oder Relais.

In einer weiteren bevorzugten Ausführungsform erfolgt die Unterbrechung und/oder Wiederherstellung der elektrischen Verbindung zwischen wenigstens einer der Teileinheiten und der Stromquelle durch Halbleiterbauelemente, insbesondere Leistungstransistoren oder dergleichen.

Bevorzugt werden im wesentlichen die Hälfte der ersten Teileinheiten mit einem Pol der Spannungsquelle verbunden, während im wesentlichen die andere Hälfte mit dem zweiten Pol der Spannungsquelle verbunden wird, wobei in den jeweiligen elektrischen Verbindungssträngen ein Schaltelement, bevorzugt eine mechanische oder ein Halbleiterbauelement, insbesondere ein Leistungstransistor vorgesehen ist.

In einer weiteren besonders bevorzugten Ausführungsform ist die zweite Komponente oder eine Teileinheit der zweiten Komponente mit Einrichtungen versehen, welche zum Wärmeaustausch mit einem durch- und/oder umströmenden Medium geeignet sind, ein diese umströmendes Medium zu erwärmen. Als derartige Einrichtungen kommen beispielsweise Vorsprünge, welche aus der Ebene des zweiten Bauteils herausragen, in Betracht. Alternativ kann auch die erste Komponente mit Einrichtungen versehen sein, welche zum Wärmeaustausch mit einem durch- und/oder umströmenden Medium geeignet sind.

In einer weiteren besonders bevorzugten Ausführungsform sind neben der ersten Komponente und der zweiten Komponente zusätzliche Einrichtungen vorgesehen, durch welche die Luft hindurchströmen bzw. welche die Luft umströmen kann und welche dabei die durchströmende/umströmende Luft erwärmen. Als derartige zusätzliche Einrichtungen kommen beispielsweise Wellrippen für den Wärmeaustausch in Betracht. Die Wellrippen können in einer weiteren bevorzugten Ausführungsform Lamellen oder dergleichen aufweisen, um den Wärmeaustausch mit dem umgebenden Medium zu verbessern.

In einer weiteren besonders bevorzugten Ausführungsform können die zweiten Komponenten strukturiert sein, wobei z. B. eine Strukturierung durch Ätzen, Prägen, Sandbestrahlung oder Erosion in Betracht kommt. Auf diese Weise kann die Kontaktfläche erhöht werden. Dabei wird unter Strukturierung verstanden, dass die Oberflächen der betreffenden Komponenten nicht glatt sind, sondern Rillen, Einsenkungen, Muster oder dergleichen aufweisen.

In einer weiteren besonders bevorzugten Ausführungsform kann eine Verbindung zwischen den Heizelementen und den weiteren Komponenten mittels mechanischer, insbesondere kraftschlüssiger Verspannung erfolgen, wobei sich zur Verspannung insbesondere auch Federn und Rahmen eignen.

In einer bevorzugten Ausführungsform wird die Vorrichtung zum Austausch von Wärme in einer Klimaanlage eines Kraftfahrzeuges eingesetzt, um eine Erwärmung der Innenluft desselben zu ermöglichen. Erfindungsgemäss wird durch die Vorrichtung Luft, die in den Innenraum des Fahrzeugs geleitet wird, beheizt. Die Klimaanlage weist überdies vorzugsweise einen Kompressor, Kondensator, Trockner, Sammler, ein Expansionsventil und einen Verdampfer auf.

In einer weiteren bevorzugten Ausführungsform kann die Vorrichtung vorzugsweise in den Strömungskanal des Lüftungssystems einer Klimaanlage eingebracht werden, wobei neben einem einflutigen Strömungskanal insbesondere auch mehrflutige Strömungskanäle verwendet werden können. Hierbei können in einer Weiterbildung der erfindungsgemässen Vorrichtung die unterschiedlichen Luftströme des mehrflutigen Strömungskanals auf unterschiedliche und unabhängige Art und Weise beheizt werden.

Die erfindungsgemässe Vorrichtung kann des weiteren zusätzlich zu einem üblicherweise verwendeten Wärmetauscher in einem Kraftfahrzeug eingesetzt werden, und ist dabei vorzugsweise so lange im Betrieb, bis die vom Heiz- und Kühlkreislauf eines Kraftfahrzeuges zur Verfügung gestellte Wärme des Verbrennungsmotors ausreicht, um eine ausreichende Erwärmung der in den Fahrzeuginnenraum geführten Luft zu erreichen.

Eine weitere Anwendung findet die erfindungsgemässe Vorrichtung in Kraftfahrzeugen mit niedrigem Kraftstoffverbrauch, deren Motor so wenig Verbrennungswärme produziert, dass nicht genügend Wärmeenergie zur ausreichenden Beheizung des Innenraums zur Verfügung steht.

Darüber hinaus kann die erfindungsgemässe Vorrichtung in beliebigen Heiz- bzw. Kühleinrichtungen allein oder neben anderen Einrichtungen zum Austauschen von Wärme verwendet werden.

Die Erfindung wird nachfolgend im Ausführungsbeispiel anhand der zugehörigen Zeichnungen näher erläutert.

Darin zeigen:
- Fig. 1: eine schematische Darstellung einer Vorrichtung zum Austausch von Wärme gemäss der vorliegenden Erfindung;
- Fig. 1a: eine Seitenansicht der Vorrichtung zum Austausch von Wärme aus Fig. 1.
- Fig. 1b: eine perspektivische Darstellung der Vorrichtung zum Austausch von Wärme aus Fig. 1;
- Fig. 1c: eine weitere Seitenansicht der Vorrichtung zum Austausch von Wärme aus Fig. 1 mit einer elektrischen Schaltung;
- Fig. 2: eine schematische Darstellung einer weiteren Ausführungsform einer Vorrichtung zum Austausch von Wärme gemäss der vorliegenden Erfindung;
- Fig. 2a: eine perspektivische Darstellung der Vorrichtung zum Austausch von Wärme aus Fig. 2
- Fig. 2b: eine schematische Darstellung einer Komponente der Vorrichtung zum Austausch von Wärme nach Fig. 2;
- Fig. 2c: eine Seitenansicht der Komponente aus Fig. 2a
- Fig. 2d: eine Draufsicht auf eine weitere Komponente der Vorrichtung zum Austausch von Wärme aus Fig 2;
- Fig. 2e: eine ausschnittweise Darstellung beider Komponenten aus den Fig. 2c und 2d für eine Vorrichtung zum Austausch von Wärme nach Fig.2
- Fig. 2f: eine Seitenansicht der Darstellung aus Fig. 2e;
- Fig. 2g: eine Schnittdarstellung entlang der Linie A - A aus Fig. 2f;
- Fig. 3: eine schematische Darstellung einer weiteren Ausführungsform einer Vorrichtung zum Austausch von Wärme gemäss der vorliegenden Erfindung;
- Fig. 3a: eine perspektivische Darstellung der Vorrichtung Fig. 3;
- Fig. 3b: eine Darstellung einer Komponente einer Vorrichtung aus Fig. 3;
- Fig. 3c: eine Schnittdarstellung entlang der Linie A - A aus Fig. 3b;
- Fig. 3d: eine Schnittdarstellung entlang der Linie B - B aus Fig. 3b.

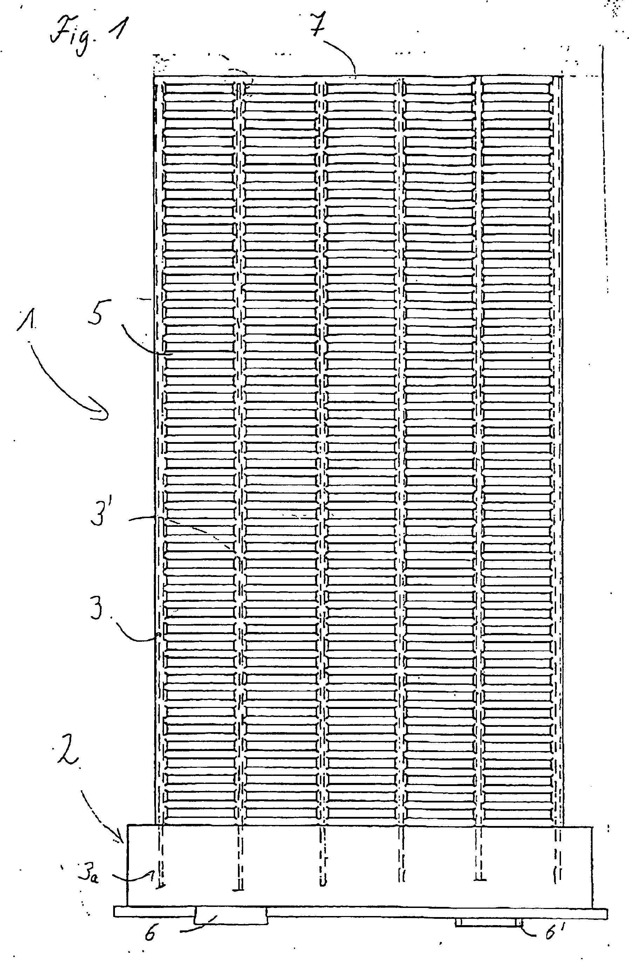

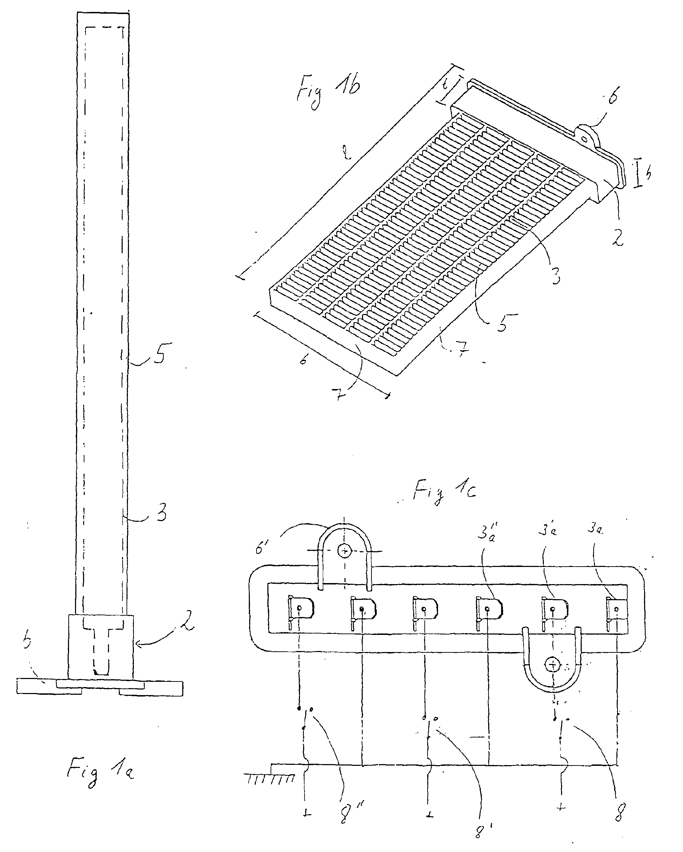

Fig. 1 zeigt eine schematische Darstellung eines Wärmetauschers (1) gemäss der vorliegenden Erfindung. Dabei kennzeichnet das Bezugszeichen 2 einen Einbaurahmen, in welchen die Komponenten des Wärmetauschers zumindest teilweise angeordnet sind. Die Bezugszeichen 3 und 3' kennzeichnen zwei Teileinheiten der zweiten Komponente, die im weiteren als Kontaktbleche bezeichnet werden und die nur gestrichelt angedeutet sind, da sie von außen nicht sichtbar sind. Das Bezugszeichen 5 kennzeichnet ein zwischen den Kontaktblechen angeordnetes Heizelement. Dabei ist das zwischen den Kontaktblechen angeordnete Heizelement derart ausgeführt, dass es Rippen ausbildet, zwischen welchen das zu erwärmende Medium hindurchströmt und dadurch erwärmt wird.

Die Hauptströmungsrichtung des um- und/oder durchströmenden Mediums verläuft in Fig. 1 senkrecht zur Zeichnungsebene.

Der Einbaurahmen 2 besteht vorzugsweise aus einem nicht stromleitenden Material, bevorzugt einem nicht stromleitenden Kunststoff. Dabei weist dieses Material eine vorgegebene Temperaturleitfähigkeit auf. Besonders bevorzugt wird als nicht stromleitender Kunststoff ein Thermoplast wie beispielsweise Polyamid verwendet.

Für das Heizelement wird bevorzugt ein Kunststoff mit einem spezifischen elektrischen Widerstand von 1 bis 300 Ohm*cm, bevorzugt von 1 bis 10 Ohm*cm, besonders bevorzugt von 4 bis 6 Ohm*cm (jeweils bei 0°) verwendet. Als Material für den Kunststoff wird bevorzugt Polypropylen mit Russ bzw. EVA (Ethyl Vinyl Acetat) mit Russ verwendet. Es kommen jedoch auch andere Materialien in Betracht.

In Abbildung 1a ist eine Seitenansicht der Wärmetauscherbaugruppe aus Fig. 1 dargestellt. Das Bezugszeichen 2 kennzeichnet die Aufnahmeeinrichtung, das Bezugszeichen 3 bezieht sich wiederum auf die Kontaktbleche, wobei auch hier die Darstellung nur gestrichelt erfolgt, da das Kontaktblech nicht direkt sichtbar ist. Das Bezugszeichen 5 bezieht sich auf das Heizelement. Die einzelnen Kontaktbleche werden in einem Werkzeug aufgenommen und mit dem Kunststoff mit PTC-Effekt umspritzt. Dabei werden gleichzeitig die oben erwähnten Rippen für einen guten Wärmeaustausch mit dem umströmenden Medium gebildet.

Fig. 1b zeigt eine perspektivische Darstellung der Wärmetauscherbaugruppe aus Fig. 1, wobei die Aufnahmeeinrichtung mit dem Bezugszeichen 2 gekennzeichnet ist und die Heizelemente mit dem Bezugszeichen 5. Mit einer Befestigungseinrichtung 6 kann die Wärmetauscherbaugruppe an anderen Bauteilen befestigt werden. in einer bevorzugten Ausführungsform kann die Befestigungseinrichtung 6 auch als Kontaktstelle für einzelne zweite Komponenten dienen.

Die Länge 1 der Wärmetauscherbaugruppe liegt zwischen 100 mm und 300 mm, bevorzugt zwischen 150 mm und 250 mm und besonders bevorzugt zwischen 190 mm und 220 mm.

Die Breite b der Wärmetauscherbaugruppe beträgt zwischen 30 und 170 mm, bevorzugt zwischen 70 und 130 mm und besonders bevorzugt zwischen 90 und 110 mm.

Die Tiefe t des Einbaurahmens 2 liegt zwischen 10 mm und 30 mm, bevorzugt zwischen 15 und 25 mm und besonders bevorzugt zwischen 18 und 22 mm.

Die Höhe der Aufnahmeeinrichtung liegt zwischen 10 mm und 40 mm, bevorzugt zwischen 15 mm und 35 mm und besonders bevorzugt zwischen 20 und 30 mm.

In Fig. 1 und 1b weisen also nicht nur die einzelnen Rippen den Kunststoff mit PTC-Effekt auf, sondern auch die mit dem Bezugszeichen 7 gekennzeichneten Randbereiche der Vorrichtung.

Es ist jedoch auch möglich, für die Randbereiche 7 ein anderes Material, z. B. einen nicht stromleitenden Kunststoff zu verwenden.

Im Zusammenhang mit den Figuren 1 bis 1c wird als rippenförmig eine geometrische Form bezeichnet, die sich im wesentlichen entlang zweier nicht paralleler Richtungen erstreckt, wobei eine dritte Ausdehnungsrichtung, welche im wesentlichen senkrecht auf der von den beiden erstgenannten Richtungen aufgespannten Ebene steht eine wesentlich geringere Ausdehnung aufweist. Im Querschnitt weist eine derartige rippenförmige Gestalt bevorzugt wenigstens einen sphärischen Abschnitt auf, es sind jedoch auch im wesentlichen rechteckförmige Querschnitte denkbar.

Es wird jedoch darauf hingewiesen, dass der Begriff rippenartig im übrigen bei weitem über die sich auf Fig. 1 - 1c beziehende Definition hinaus geht. Eine rippenartige Struktur zeichnet sich im Rahmen der Erfindung insbesondere dadurch aus, dass wenigstens zwei, bevorzugt eine Vielzahl von gleichartigen Körpern, im wesentlichen parallel in einer Ebene angeordnet sind. Diese einzelnen geometrischen Körper können dabei beliege geometrische Formen, wie beispielsweise zylindrische Formen, Formen mit Kanten oder der gleichen annehmen.

In Fig. 1c ist schematisch ein Beispiel für die Beschaltung der einzelnen Kontaktbleche dargestellt. Die Bezugszeichen 6 und 6' kennzeichnen die Befestigungseinrichtungen. Die Bezugszeichen 3a, 3a' 3a " bezeichnen die Anschlusskontakte der einzelnen Kontaktbleche. In einer bevorzugten Ausführungsform werden die Anschlusskontakte 3a und 3a'' sowie 3a'''' elektrisch leitend mit der Masse verbunden. Die übrigen Anschlusskontakte 3a', 3a''' und 3a''''' werden mit dem Pluspol einer Stromquelle verbunden und können über Schalter 8, 8' und 8'' jeweils anund abgeschaltet werden. Hierbei können in einer besonders bevorzugten Ausführungsform auch Halleiterbauelemente, wie Leistungstransistoren Anwendung finden.

Der Abstand der einzelnen Heizelemente d.h. der einzelnen Rippen liegt zwischen 0,5 mm und 7 mm, bevorzugt zwischen 1 mm und 6 mm und besonders bevorzugt ca. 2 mm.

Die Länge der einzelnen Rippen, d.h. deren Ausdehnung in Richtung der in Fig. 1b dargestellten Breite b der Baugruppe liegt zwischen 5mm und 40mm, bevorzugt zwischen 10mm und 25mm und besonders bevorzugt zwischen 15mm und 20mm.

Die Heizelemente sind nicht senkrecht zur Hauptströmungsrichtung der Luft angeordnet, sondern in einem vorgegebenen Winkel bezüglich derselben.

Definitionsgemäss liegt ein Winkel von 0° vor, wenn die in der Richtung h verlaufende Breitseite der Rippe parallel zur Strömungsrichtung des um- und/oder durchströmenden Mediums steht. Der vorgegebene Winkel liegt seinem Betrag nach zwischen 0° und 90°, bevorzugt zwischen 0° und 45° und besonders bevorzugt zwischen 0° und 30°.

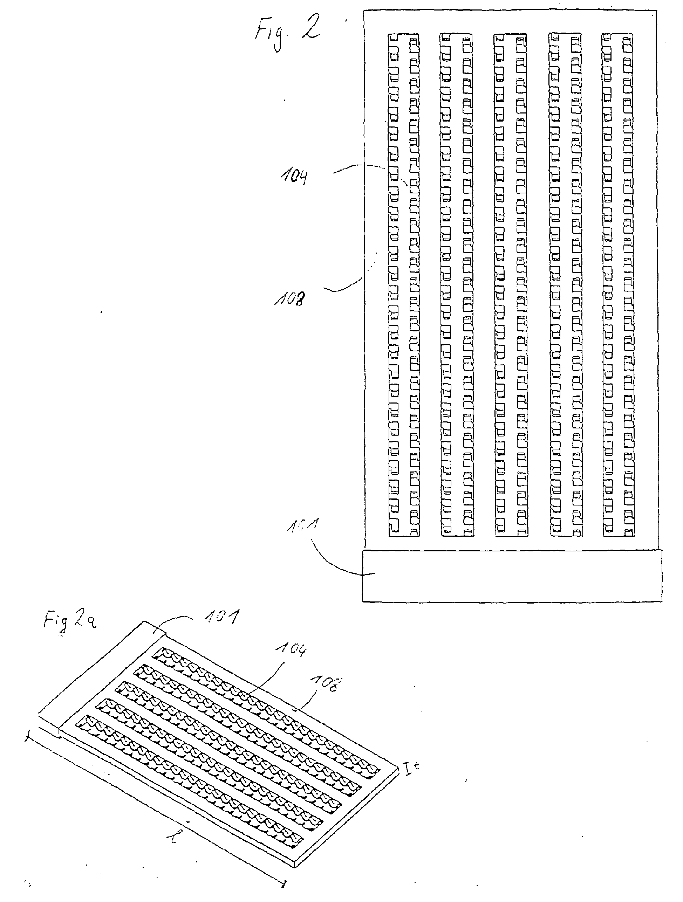

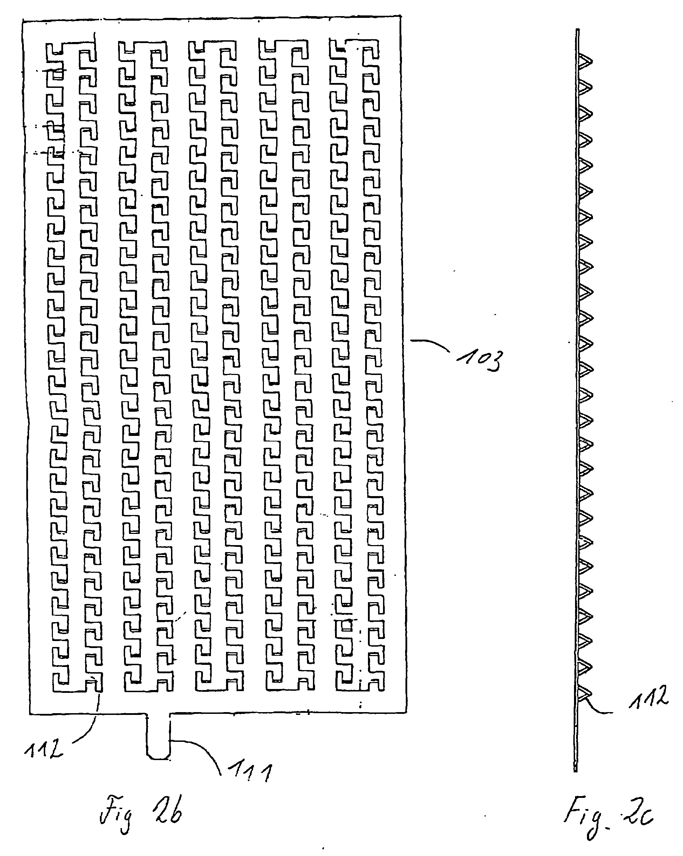

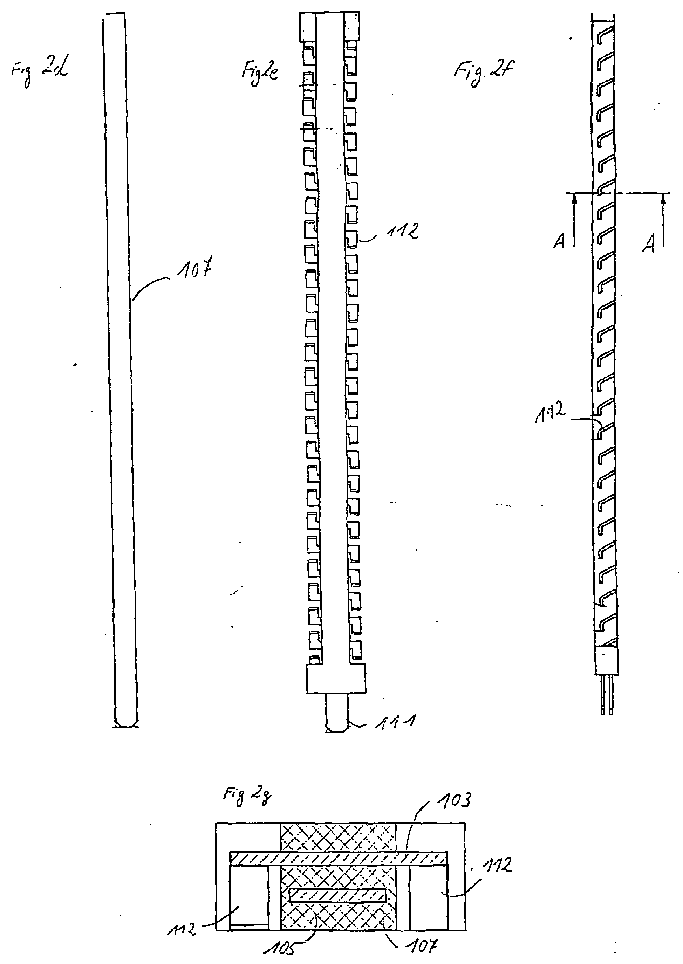

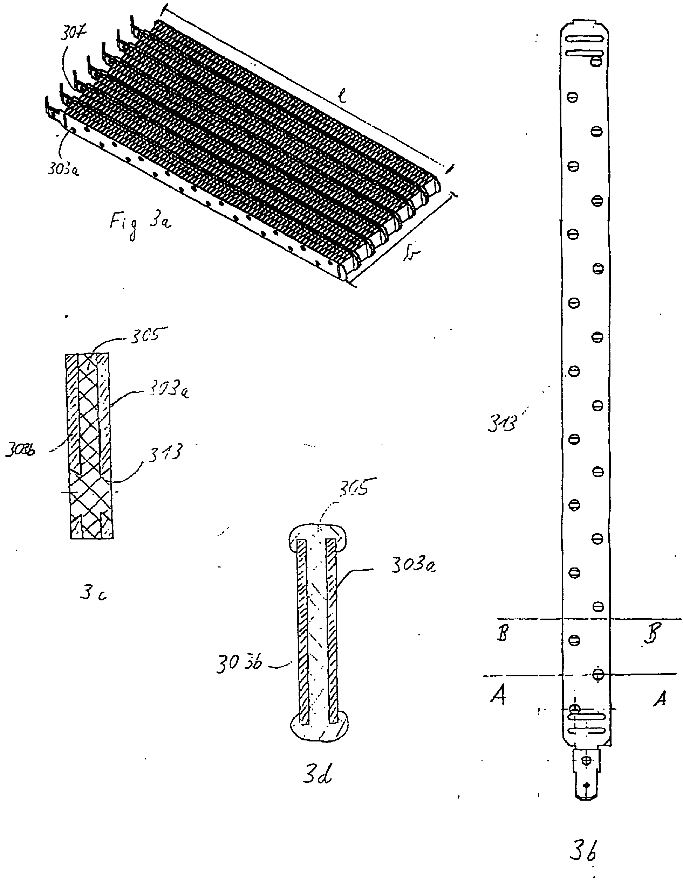

In Fig. 2 ist eine weitere Ausführungsform einer Wärmetauscherbaugruppe gemäss der vorliegenden Erfindung dargestellt. Dabei kennzeichnet das Bezugszeichen 101 eine Aufnahmeeinrichtung für die Baugruppe, die bevorzugt aus einem nicht stromleitenden Material und besonders bevorzugt aus einem nicht stromleitenden Kunststoff hergestellt ist. Das Bezugszeichen 104 kennzeichnet ein Heizelement, wobei in der vorliegenden Figur 5 die Erfindung exemplarisch an einem Beispiel mit fünf Heizelementen beschrieben wird.

Das Bezugszeichen 105 kennzeichnet die erste Komponente. Bei der hier beschriebenen Ausführungsform ist die erste Komponente nicht nur zwischen den einzelnen Kontaktblechen angeordnet, sondern darüber hinaus auch zwischen den einzelnen Heizelementen. Dies bringt den Vorteil eines verbesserten Wärmeaustauschs, sowie einer vereinfachten Herstellung.

Gemäß einer besonders bevorzugten Ausführungsform weist das Heizelement einen bevorzugten Kunststoff auf, dessen spezifischer Widerstand zwischen 1 und 300 Ohm*cm, bevorzugt zwischen 100 bis 200 Ohm*cm und besonders bevorzugt zwischen 150 und 170 Ohm*cm liegt.

Fig. 2a zeigt eine perspektivische Ansicht der Wärmetauscherbaugruppe aus Fig. 5. Die Tiefe der Wärmetauscherbaugruppe t liegt zwischen 2 mm und 8 mm, bevorzugt zwischen 4 mm und 7 mm und besonders bevorzugt zwischen 5,5 mm und 6,3 mm. Die Länge 1 der Vorrichtung liegt zwischen 100mm und 300mm, bevorzugt zwischen 150mm und 250mm und besonders bevorzugt zwischen 200mm und 210mm. Die Breite b der Vorrichtung liegt zwischen 50mm und 150mm, bevorzugt zwischen 70mm und 130mm und besonders bevorzugt zwischen 90mm und 110mm.

Abbildung 2b zeigt eine Draufsicht einer ersten Teileinheit 103 der zweiten Komponente der Vorrichtung zum Austausch von Wärme. Diese erste Teileinheit wird im weiteren als "Minuskontaktblech" bezeichnet. Es wird jedoch darauf hingewiesen, dass dieses Kontaktblech nicht notwendigerweise mit dem Minuspol einer Stromquelle verbunden werden muss. Dabei kennzeichnet das Bezugszeichen 111 den Anschlusskontakt des Minuskontaktblechs. Das Bezugszeichen 112 kennzeichnet einen Vorsprung, der aus der Ebene des Kontaktbleches herausragt. Bevorzugt sind mehrere dieser Vorsprünge vorgesehen, die im folgenden als Fahnen bezeichnet werden. Die Fahnen können derart gestaltet sein, dass sie unter einem vorbestimmten Winkel aus der Ebene des Kontaktbleches herausragen. Dieser Winkel liegt dabei zwischen 20 und 90°, bevorzugt zwischen 40 und 70° und besonders bevorzugt zwischen 55 und 65°.

Die Fahnen können jedoch auch derart ausgeführt werden, dass sie selbst noch einmal gegenüber ihrer ursprünglichen Richtung abgewinkelt sind. Bevorzugt liegt dieser weitere Winkel zwischen 90 und 150°, bevorzugt zwischen 100 und 140° und besonders bevorzugt zwischen 115 und 125°.

Die Fahnen können derartig ausgerichtet werden, dass jede dieser Fahnen in der gleichen Richtung aus der Ebene des Kontaktbleches herausragt. Die Fahnen können jedoch auch so angeordnet werden, dass sie alternierend einmal nach oben und einmal nach unten aus der Ebene des Kontaktbleches herausragen. Auf diese Weise wird eine Turbulenz erzeugt, welche wiederum zu einer Erhöhung des Wirkungsgrades der Vorrichtung führt. Schliesslich können die Fahnen auch derart ausgeführt werden, dass sie abhängig vom jeweiligen Heizelement und/oder der Lage am Heizelement alternierend nach oben bzw. nach unten aus der Ebene des Kontaktblechs herausragen.

Fig. 2c zeigt eine Seitenansicht des in Fig. 2b dargestellten Minuskontaktbleches. Die gezeigte dreiecksförmige Struktur der Fahnen ergibt sich, wenn die Fahnen alternierend in zwei entgegengesetzte Richtungen aus dem Minuskontaktblech herausragen.

Beim Betrieb erwärmt sich zunächst durch den Stromfluss der PTC-Kunststoff, dieser gibt aufgrund der kontaktartigen Verbindung mit dem Minuskontaktblech seine Wärme an dieses ab, wodurch auch die einzelnen Fahnen erwärmt werden, und so die diese umströmende Luft aufgeheizt wird.

Abbildung 2e zeigt eine zweite Teileinheit 107 der zweiten Komponente für eine Wärmetauscherbaugruppe gemäss der vorliegenden Erfindung. Diese zweite Teileinheit wird im weiteren als Pluskontaktblech bezeichnet, wobei jedoch darauf hingewiesen wird, dass die Teileinheit nicht notwendigerweise mit dem Pluspol einer Stromquelle in elektronischer Verbindung stehen muss. Die Länge L dieses Kontaktblechs liegt zwischen 100 und 300 mm, bevorzugt zwischen 150 und 250 mm und besonders bevorzugt zwischen 190 und 210 mm. Die Breite 6 des Kontaktblechs liegt zwischen 2 und 10 mm, bevorzugt zwischen 4 und 8 mm und besonders bevorzugt zwischen 5,5 und 6,5 mm.

Fig. 2g zeigt die Anordnung eines Pluskontaktbleches 107, des Minuskontaktbleches 103 sowie der ersten Komponente 105, wobei jedoch nur der einem Heizelement entsprechende Bereich dargestellt ist.

Gemäss der vorliegenden Erfindung wird das Pluskontaktblech zwischen den oben erwähnten Fahnen 112 des negativen Minuskontaktbleches angeordnet. Beide Kontaktbleche werden mit Hilfe eines PTC-Kunststoffs flächig verbunden. Das Anlegen einer Stromquelle bewirkt, dass sich der zwischen den Kontaktblechen liegende Kunststoff erwärmt und sich gleichzeitig auch der Kunststoff zwischen den einzelnen Heizelementen erwärmt. Zugleich wird, wie oben angemerkt, auch das Minuskontaktblech 103 und damit die einzelnen Fahnen 112 aufgewärmt, was die Erwärmung eines umströmenden Mediums begünstigt. Die in Abbildung 2 gezeigte Wärmetauscherbaugruppe weist fünf Heizelemente auf, es können jedoch anstelle dessen auch mehrere oder-weniger Heizelemente vorgesehen sein.

In Fig. 2f ist eine Seitenansicht der Fig. 2g dargestellt. Die hier gezeigten Fahnen weisen einen weiteren abgewinkelten Bereich auf. Fig. 2g zeigt eine Draufsicht auf den in Fig. 2 gezeigten Ausschnitt. Bei der hier gezeigten Ausführungsform wurden die Fahnen in unterschiedlicher Richtung angeordnet.

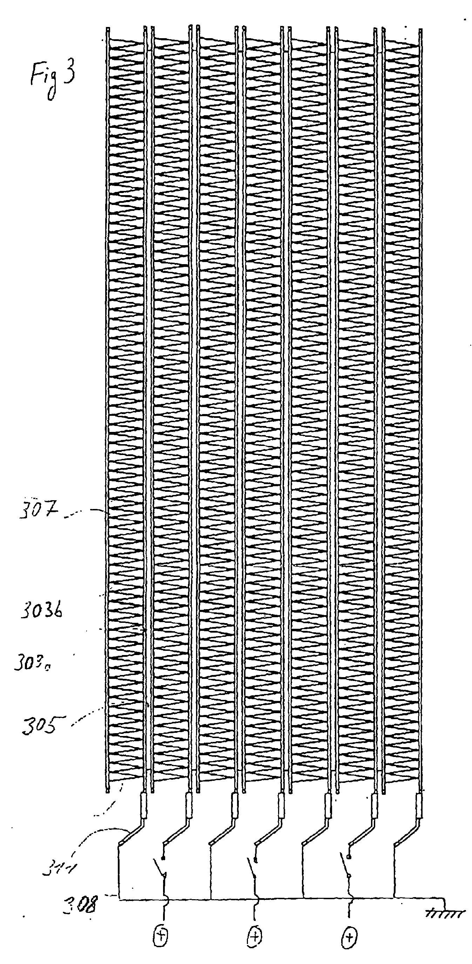

Fig. 3 zeigt eine weitere Ausführungsform einer Wärmetauscherbaugruppe gemäss der vorliegenden Erfindung. Die Bezugszeichen 303a und 303b kennzeichnen zwei Teileinheiten der zweiten Komponente, die im weiteren als Kontaktbleche bezeichnet werden, wobei jedoch erfindungsgemäss nur jeweils ein Kontaktblech 303a mit einem Anschlusskontakt ausgebildet ist.

Die beiden Kontaktbleche 303a und 303b sind flächig über einen Kunststoff mit PTC-Effekt 305 miteinander verbunden.

Die Verbindung erfolgt dabei insbesondere mittels stoffschlüssiger Verfahren, welche Verkleben, Verlöten oder dergleichen enthalten.

Als Kunststoffe mit PTC-Effekt werden gemäß dieser Ausführungsform Kunststoffe mit einem spezifischen elektrischen Widerstand bei 0° C zwischen 1 und 300 Ohm*cm, bevorzugt zwischen 100 und 200 Ohm*cm, und bevorzugt von ca. 160 Ohm*cm verwendet.

Als verwendete Kunststoffe kommen dabei PP mit Russ bzw. EVA mit Russ in Betracht. Wie in Fig. 3 dargestellt gezeigt, tritt ein Stromfluss jeweils zwischen den Kontaktblechen, welche einen Anschlusskontakt aufweisen, auf. Das heisst, der Stromfluss verläuft von einem Kontaktblech mit Anschlusskontakt 303a über die gewellten Einrichtungen 307 über ein Kontaktblech ohne Anschlusskontakt 303b und den Kunststoff mit PTC-Effekt 305 auf das weitere Kontaktblech 303a mit Anschlusskontakt. Wie in Fig. 12 dargestellt, ist eine separate Schaltung einzelner der in diesem Fall gezeigten drei Kontaktbleche möglich. Die hier verwendeten Einrichtungen 307 dienen dazu, den Wärmeaustausch mit einem strömenden Medium, insbesondere Luft, zu begünstigen.

Fig. 3a zeigt eine perspektivische Darstellung der Wärmetauschbaugruppe aus Fig. 12. Die Länge 1 der Vorrichtung liegt zwischen 100 und 300 mm, bevorzugt zwischen 150 und 260 mm und besonders bevorzugt zwischen 200 und 220 mm.

Die Breite b der Vorrichtung liegt zwischen 40 und 150 mm, bevorzugt zwischen 60 und 120 mm und besonders bevorzugt zwischen 80 und 90 mm.

Fig. 3b zeigt eine Darstellung eines der bei der erfindungsgemässen Vorrichtung verwendeten Kontaktbleche 303a.

Die Kontaktbleche weisen eine Breite von 5 bis 25 mm, bevorzugt zwischen 8 und 20 mm und besonders bevorzugt zwischen 10 und 15 mm auf.

Das Bezugszeichen 313 bezeichnet einen Durchbruch der an diesem Kontaktblech vorgesehen ist. Der Durchbruch dient der Verbindung zwischen der ersten Komponente und der zweiten Komponente, d. h. dem Kontaktblech oder den Kontaktblechen. Dies ist in Fig. 14 genauer dargestellt.

Fig. 3c zeigt die Verbindung zwischen der ersten Komponente 305 und zwei zweiten Komponenten 303b und 303a in einer Schnittdarstellung entlang der Linie A-A in Fig. 3b. Das Bezugszeichen 313 kennzeichnet den Durchbruch des bzw. der Kontaktbleche. Wie in Fig. 3c dargestellt verläuft in diesem Falle der Durchbruch nicht gerade, sondern sein Querschnitt verjüngt sich in Richtung der ersten Komponente, d. h. der PTC-Kunststoffe. Auf diese Weise wird ein sicherer Halt zwischen den beiden Komponenten gewährleistet. Es ist jedoch auch möglich, den Durchbruch nicht verjüngend auszuführen.

Der Querschnitt der einzelnen Durchbrüche liegt zwischen 1 und 10 mm, bevorzugt zwischen 1 mm und 6 mm und besonders bevorzugt zwischen 2 mm und 5 mm.

Es sind jedoch auch andere Ausgestaltungen der Durchbrüche zur besseren Verarbeitung denkbar. So wäre eine stufenweise Verjüngung in Richtung der ersten Komponente auch denkbar. Der Abstand zwischen den beiden zweiten Komponenten liegt zwischen 0,1 und 1,5 mm, bevorzugt zwischen 0,3 und 1,0 mm und besonders bevorzugt zwischen 0,6 und 0,8 mm.

Fig. 3d zeigt eine Verbindung zwischen der ersten
Komponente 305 und zwei weiteren Komponenten 303b und 303a in einer weiteren Ausführungsform als Schnittdarstellung entlang der Linie B-B in Fig. 3b.

Wie in Fig. 3d gezeigt, kann die Verbindung auch dadurch fixiert werden, dass die erste Komponente einer überstehenden Bereich 305a ausbildet, der die beiden Kontaktbleche gewissermassen klammert. Diese Vorgehensweise kann neben den Durchbrüchen oder anstelle derselben gewählt werden. Die Verbindung kommt dadurch zustande, dass eine zumindest teilweise Umspritzung der zweiten Komponente mit der ersten Komponente durchgeführt wird und die in Fig. 15 dargestellten Überhänge entstehen, welche eine Verbindung zwischen den Elementen schaffen.

## Patentansprüche

1. Vorrichtung zum Austausch von Wärme, insbesondere für ein Kraftfahrzeug, mit
wenigstens einer Wärmetauscherbaugruppe (1), wobei diese Wärmetauscherbaugruppe
mehrere erste Komponenten (5, 105, 305) aufweist, welche von einem elektrischen Strom durchflossen werden, und deren Temperatur sich in Abhängigkeit des durch die Komponente fließenden Stromes ändert und dass der Austausch von thermischer Energie zwischen der ersten Komponente und einem diese umströmenden Medium begünstigt wird; und
wobei der Stromfluss durch einzelne erste Komponenten (5, 105, 305) zu- oder abgeschaltet werden kann, wodurch die Heizleistung der Vorrichtung zum Austausch von Wärme gesteuert, insbesondere reguliert werden kann,
**dadurch gekennzeichnet, dass**
wenigstens eine ersten Komponenten (5, 105, 305) ein Heizelement ist, das wenigstens teilweise aus einem Kunststoffmaterial mit PTC-Eigenschaften hergestellt ist, und
die Vorrichtung zum Austausch von Wärme wenigstens eine zweite Komponente aufweist, welche aus wenigstens zwei Teileinheiten (3, 3'; 103, 107; 303a, 303b) besteht, und wobei diese beiden Teileinheiten die erste Komponente (5, 105, 305) derartig kontaktieren, dass elektrische Ladungsträger zwischen der ersten und der zweiten Komponente ausgetauscht werden, wobei
die Teileinheiten (3, 3'; 103, 107; 303a, 303b) der zweiten Komponente als Kontaktbleche ausgebildet sind und wenigstens eine erste Komponente (5, 105, 305) wenigstens teilweise mit den Teileinheiten (3, 3'; 103, 107; 303a, 303b) der zweiten Komponente flächig verbunden ist, und
wenigstens eine Teileinheit (3, 3'; 103, 107; 303a, 303b) der zweiten Komponente mit der ersten Komponente formschlüssig verbunden ist, von der ersten Komponente (5, 105, 305) wenigstens teilweise umgeben ist.

2. Vorrichtung zum Austausch von Wärme nach Anspruch 1,
**dadurch gekennzeichnet, dass**
wenigstens eine erste Komponente (5, 105) derart gestaltet ist, dass sie sich in einem vorbestimmten Abstand zwischen den Teileinheiten (3, 3'; 103, 107) der zweiten Komponente erstreckt.

3. Vorrichtung zum Austausch von Wärme nach Anspruch 1 oder 2,
**dadurch gekennzeichnet, dass**
die erste Komponente (5, 104, 305) zumindest teilweise aus einem Kunststoffmaterial besteht, welches aus einer Gruppe ausgewählt ist, die thermoplastische und duroplastische Kunststoffe, insbesondere PP (Polypropylen) mit Russ, PE (Polyethylen), Polyolefine und deren Familie, EVA (Ethyl-VinylAcetat) mit Russ, PS (Polystyrol) mit Russ, PU (Polyurethan) oder dergleichen, oder Verbindungen aus diesen Materialien enthält.

4. Vorrichtung zum Austausch von Wärme nach Anspruch 1, 2 oder 3,
**dadurch gekennzeichnet, dass**
die erste Komponente (5, 104, 305) bei 0°C einen spezifischen elektrischen Widerstand von 1 Ohm·cm bis 300 Ohm·cm, bevorzugt zwischen 100 Ohm·cm und 200 Ohm·cm und besonders bevorzugt von ca. 160 Ohm·cm aufweist.

5. Vorrichtung zum Austausch von Wärme nach einem der Ansprüche 1, 2 oder 3,
**dadurch gekennzeichnet, dass**
die erste Komponente (5, 104, 305) bei 0°C einen spezifischen elektrischen Widerstand von 1 Ohm·cm bis 300 Ohm·cm, bevorzugt zwischen 1 Ohm·cm und 10 Ohm·cm und besonders bevorzugt von 4 Ohm·cm bis 6 Ohm·cm aufweist.

6. Vorrichtung zum Austausch von Wärme nach wenigstens einem der vorangegangenen Ansprüche,
**dadurch gekennzeichnet, dass**
die Vorrichtung eine Aufnahmeeinrichtung (2, 101) aufweist, in der die erste und/oder die zweite Komponente angeordnet ist, wobei diese Aufnahmeeinrichtung (2, 101) bevorzugt zumindest aus einem nicht stromleitenden Material, insbesondere aus einem nicht stromleitenden Kunststoff und insbesondere aus einem Thermoplast wie beispielsweise Polyamid besteht.

7. Vorrichtung zum Austausch von Wärme nach wenigstens einem der vorangegangenen Ansprüche,
**dadurch gekennzeichnet, dass**
die erste Komponente (5, 104, 305) wenigstens teilweise eine rippenartige Form aufweist.

8. Vorrichtung zum Austausch von Wärme nach wenigstens einem der vorangegangenen Ansprüche,
**dadurch gekennzeichnet, dass**
die Querschnittsfläche und die Länge der erste Komponente (5, 104, 305) so gewählt wird, das ein vorgegebener Widerstandswert und/oder ein vorgegebener Leistungswert erreicht wird.

9. Vorrichtung zum Austausch von Wärme nach wenigstens einem der vorangegangenen Ansprüche,
**dadurch gekennzeichnet, dass**
die Teileinheiten (3, 3'; 103, 107; 303a, 303b) der zweiten Komponente, die mit der ersten Komponente (5, 104, 305) verbunden sind, mit den Polen einer Stromquelle in elektrischer Verbindung stehen.

10. Vorrichtung zum Austausch von Wärme nach Anspruch 9,
**dadurch gekennzeichnet, dass**
die elektrische Verbindung zwischen wenigstens einer der Teileinheiten (3, 3'; 103, 107; 303a, 303b) der zweiten Komponente und der Stromquelle unabhängig von der Verbindung zwischen den übrigen Teileinheiten der zweiten Komponente unterbrochen und/oder hergestellt werden kann, so dass ein Stromkreis, der als Elemente wenigstens die Stromquelle, und/oder die Teileinheiten der zweiten Komponente und/oder die erste Komponente (5, 104, 305) aufweist, geöffnet und geschlossen werden kann.

11. Vorrichtung zum Austausch von Wärme nach Anspruch 10,
**dadurch gekennzeichnet, dass**
die Unterbrechung und/oder die Herstellung der elektrischen Verbindung zwischen wenigstens einer der Teileinheiten (3, 3'; 103, 107; 303a, 303b) und der Stromquelle durch mechanische Schalteinrichtungen (8, 8', 8"), insbesondere Schalter oder Relais oder dergleichen erfolgt.

12. Vorrichtung zum Austausch von Wärme nach Anspruch 10,
**dadurch gekennzeichnet, dass**
die Unterbrechung und/oder die Wiederherstellung der elektrischen Verbindung zwischen wenigstens einer der Teileinheiten (3, 3'; 103, 107; 303a, 303b) und der Stromquelle durch Halbleiterelemente, insbesondere Leistungstransistoren, erfolgt.

13. Vorrichtung zum Austausch von Wärme nach wenigstens einem der vorangegangenen Ansprüche,
**dadurch gekennzeichnet, dass**
die erste Komponente (5, 104, 305) wenigstens teilweise in einem vorbestimmten Winkel α gegenüber einer Hauptströmungsrichtung eines durchfließenden Mediums angeordnet ist.

14. Vorrichtung zum Austausch von Wärme nach Anspruch 13,
**dadurch gekennzeichnet, dass**
der Winkel α, den die erste Komponente (5, 104, 305) mit der Hauptströmungsrichtung des durchfließenden Mediums einschließt, seinem Betrag nach zwischen 0° und 90°, bevorzugt zwischen 0° und 45° und besonders bevorzugt zwischen 0° und 30° liegt.

15. Vorrichtung zum Austausch von Wärme nach wenigstens einem der vorangegangenen Ansprüche,
die zweite Komponente mit Einrichtungen, insbesondere Rippen und/oder Fahnen (112) versehen ist, welche dazu geeignet sind, ein diese umströmendes Medium zu erwärmen.

16. Vorrichtung zum Austausch von Wärme nach wenigstens einem der vorangegangenen Ansprüche,
**dadurch gekennzeichnet, dass**
zusätzliche Einrichtungen (dritte Komponenten; 307) vorgesehen sind, welche dazu geeignet sind, ein diese umströmendes und/oder diese durchströmendes Medium zu erwärmen, wobei diese Einrichtungen (307) einteilig mit wenigstens einer der Teileinheiten (3, 3'; 103, 107; 303a, 303b) der zweiten Komponente und/oder der ersten Komponente (5, 104, 305) ausgebildet sind.

17. Vorrichtung zum Austausch von Wärme nach wenigstens einem der vorangegangenen Ansprüche,
**dadurch gekennzeichnet, dass**
mehrere zweite Komponenten vorgesehen sind, welche von elektrischem Strom durchflossen werden.

18. Vorrichtung zum Austausch von Wärme nach wenigstens einem der vorangegangenen Ansprüche,
**dadurch gekennzeichnet, dass**
wenigstens eine der ersten (5, 104, 305) und/oder der zweiten und/oder der dritten (307) Komponenten strukturiert ist.

19. Vorrichtung zum Austausch von Wärme nach wenigstens einem der vorangegangenen Ansprüche,
**dadurch gekennzeichnet, dass**
die Einzelkomponenten (5, 104, 305; 3, 3'; 103, 107; 303a, 303b; 307) kraftschlüssig miteinander verbundenen sind, insbesondere durch Federn, verspannt sind.

20. Vorrichtung zum Austausch von Wärme nach Anspruch 16,
**dadurch gekennzeichnet, dass**
zur einteiligen Ausbildung zwischen der zweiten und der dritten Komponente (307) ein Verbindungsmaterial angeordnet ist, welches aus einer Gruppe ausgewählt ist, welche insbesondere Klebstoff, Lot oder dergleichen enthält.

21. Vorrichtung zum Austausch von Wärme nach wenigstens einem der vorangegangenen Ansprüche,
**dadurch gekennzeichnet, dass**
wenigstens eine Teileinheit (3, 3'; 103, 107; 303a, 303b) der zweiten Komponente Einrichtungen aufweist, welche die mechanische Verbindung mit der ersten Komponente (5, 104, 305) begünstigen.

22. Vorrichtung zum Austausch von Wärme nach Anspruch 21,
**dadurch gekennzeichnet, dass**
die Einrichtungen durchbruchartige Öffnungen (313) durch wenigstens eine Teileinheit (3, 3'; 103, 107; 303a, 303b) der zweiten Komponente sind, durch welche die erste Komponente (5, 104, 305) wenigstens teilweise hindurch tritt.

23. Vorrichtung zum Austausch von Wärme nach Anspruch 21 oder 22,
**dadurch gekennzeichnet, dass**
sich die durchbruchartigen Öffnungen (313) in Richtung der der ersten Komponente (5, 104, 305) zugewandten Fläche einer Teileinheit (3, 3'; 103, 107; 303a, 303b) der zweiten Komponente verjüngen.

24. Einrichtung zum Austausch von Wärme,
**dadurch gekennzeichnet, dass**
es sich bei dieser Einrichtung um eine Klimaanlage für ein Kraftfahrzeug handelt, wobei in wenigstens einem Strömungskanal dieser Klimaanlage wenigstens eine Vorrichtung zum Austausch von Wärme nach wenigstens einem der vorangegangenen Ansprüche angeordnet ist.

## Claims

1. Heat exchange device, in particular for a motor vehicle, with at least on heat exchanger structural group (1) this heat exchanger structural group comprising several first components (5, 105, 305) through which an electric current flows and whose temperature changes as a function of the current flowing through the components, such as to enable an exchange of thermal energy between the said first components and a medium flowing around them; and such that the current flow through individual first components (5, 105, 305) can be switched on or off whereby the heating power of the heat exchange device can be controlled and in particular regulated,
**characterised in that**
at least one first component (5, 105, 305) is a heating element made at least in part from a plastic material with PTC properties, and
the heat exchange device comprises at least one second component consisting of at least two part-units (3, 3'; 103, 107; 303a, 303b), these two part-units being in contact with the first components (5, 105, 305) in such manner that electric charge carriers are exchanged between the first and the second components,
the part-units (3, 3'; 103, 107; 303a, 303b) of the second components being made as contact sheets and at least one first component (5, 105, 305) being at least partially connected over an area with the part-units (3, 3'; 103, 107; 303a, 303b) of the second component, and
at least one part-unit (3, 3'; 103, 107; 303a, 303b) of the second component being connected with positive locking to the first component, being at least partially surrounded by the first component (5, 105, 305).

2. Heat exchange device according to Claim 1,
**characterised in that**
at least one first component (5, 105) is designed such that it extends at a predetermined distance between the part-units (3, 3'; 103, 107) of the second component.

3. Heat exchange device according to Claims 1 or 2,
**characterised in that**
the first component (5, 105, 305) consists at least in part of a plastic material chosen from a group comprising thermoplastics and thermosetting plastics, in particular PP (polypropylene) with carbon black, PE (polyethylene), polyolefins and their family, EVA (ethyl-vinyl-acetate) with carbon black, PS (polystyrene) with carbon black, PU (polyurethane) or suchlike, or combinations of these materials.

4. Heat exchange device according to Claims 1, 2 or 3,
**characterised in that**
the first component (5, 105, 305) has a specific electrical resistance at 0°C of between 1 Ohm.cm and 300 Ohm.cm, preferably between 100 Ohm.cm and 200 Ohm.cm, and particularly preferably about 160 Ohm.cm.

5. Heat exchange device according to any of Claims 1, 2 or 3,
**characterised in that**
the first component (5, 105, 305) has a specific electrical resistance at 0°C of between 1 Ohm.cm and 300 Ohm.cm, preferably between 1 Ohm.cm and 10 Ohm.cm, and particularly preferably between 4 Ohm.cm and 6 Ohm.cm.

6. Heat exchange device according to at least one of the preceding claims,
**characterised in that**
the device comprises holding means (2, 101) in which the first and/or the second component is arranged, the said holding means (2, 101) preferably consisting of an insulating material, in particular an insulating plastic, especially a thermoplastic such as polyamide.

7. Heat exchange device according to at least one of the preceding claims,
**characterised in that**
the first component (5, 105, 305) has a finned shape, at least in part.

8. Heat exchange device according to at least one of the preceding claims,
**characterised in that**
the cross-sectional area and length of the first component (5, 105, 305) are chosen such that the component has a specified resistance value and/or a specified power value.

9. Heat exchange device according to at least one of the preceding claims,
**characterised in that**
the part-units (3, 3'; 103, 107; 303a, 303b) of the second component which are connected to the first component are electrically connected to the terminals of a current source.

10. Heat exchange device according to Claim 9,
**characterised in that**
the electric connection between at least one of the part-units (3, 3'; 103, 107; 303a, 303b) of the second component and the current source can be broken and/or made independently of the connection between the other part-units of the second component, such that a current circuit comprising as its element at least the current source and/or the part-units of the second component and/or the first component (5, 105, 305) can be opened and closed.

11. Heat exchange device according to Claim 10,
**characterised in that**
the electric connection between at least one of the part-units (3, 3'; 103, 107; 303a, 303b) and the current source is broken and/or made by means of mechanical switching devices (8, 8', 8"), in particular switches, relays or suchlike.

12. Heat exchange device according to Claim 10,
**characterised in that**
the electric connection between at least one of the part-units (3, 3'; 103, 107; 303a, 303b) and the current source is broken and/or remade by means of semiconductor elements, in particular power transistors.

13. Heat exchange device according to at least one of the preceding claims,
**characterised in that**
the first component (5, 105, 305) is arranged at least partially at a predetermined angle α relative to a main flow direction of a through-flowing medium.

14. Heat exchange device according to Claim 13,
**characterised in that**
the angle α enclosed between the first component (5, 105, 305) and the main flow direction of the through-flowing medium is between 0° and 90°, preferably between 0° and 45° and particularly preferably between 0° and 30°.

15. Heat exchange device according to at least one of the preceding claims,
**characterised in that**
the second component is provided with means, in particular fins and/or vanes (122), which are appropriate for heating a medium that is flowing around them.

16. Heat exchange device according to at least one of the preceding claims,
**characterised in that**
additional devices (third components; 307) are provided, which are appropriate for heating a medium flowing around and/or through them, the said devices (307) being formed integrally with at least one of the part-units (3, 3'; 103, 107; 303a, 303b) of the second component and/or of the first component (5, 105, 305).

17. Heat exchange device according to at least one of the preceding claims,
**characterised in that**
a plurality of second components are provided, through which electric current passes.

18. Heat exchange device according to at least one of the preceding claims,
**characterised in that**
at least one of the first (5, 105, 305) and/or the second and/or the third (307) components is structured.

19. Heat exchange device according to at least one of the preceding claims,
**characterised in that**
the individual components (5, 105, 305; 3, 3'; 103, 107; 303a, 303b; 307) are joined together by friction force, in particular held together by springs.

20. Heat exchange device according to Claim 16,
**characterised in that**
to form the integral structure consisting of the second and third (307) components, a joining material is applied between them, chosen from a group that comprises in particular adhesive, braze metal or suchlike.

21. Heat exchange device according to at least one of the preceding claims,
**characterised in that**
at least one part-unit (3, 3'; 103, 107; 303a, 303b) of the second component has means that enable mechanical connection to the first component (5, 105, 305).

22. Heat exchange device according to Claim 21,
**characterised in that**
the said means are perforation-like openings (313) through at least one part-unit (3, 3'; 103, 107; 303a, 303b) of the second component, through which the first component (5, 105, 305) projects at least in part.

23. Heat exchange device according to Claims 21 or 22,
**characterised in that**
the perforation-like openings (313) taper in the direction of the surface of a part-unit (3, 3'; 103, 107; 303a, 303b) of the second component facing towards the first component (5, 105, 305).

24. Heat exchanger equipment,
**characterised in that**
The said heat exchange equipment is an air-conditioning installation for a motor vehicle, and at least one heat exchange device according to at least one of the preceding claims is arranged in at least one flow channel of the air-conditioning unit.

## Revendications

1. Dispositif d'échange de chaleur, en particulier pour un véhicule automobile, ayant au moins un ensemble d'échangeur de chaleur (1), où cet ensemble d'échangeur de chaleur comprend plusieurs premiers composants (5, 105, 305) qui sont traversés par un courant électrique et dont la température change en fonction du courant traversant les composants et l'échange d'énergie thermique entre le premier composant et une substance circulant autour de celui-ci est favorisé; et où l'intensité de courant à travers les premiers composants individuels (5, 105, 305) peut être activé ou arrêté, ce par quoi la puissance de chauffage du dispositif d'échange de chaleur peut être commandée, en particulier régulée,
**caractérisé en ce qu'**au moins un premier composant (5, 105, 305) est un élément de chauffage qui est fabriqué au moins partiellement à partir d'un matériau synthétique ayant des propriétés PTC ; et
**en ce que** le dis-positif d'échange de chaleur comprend au moins un deuxième composant qui est constitué d'au moins deux unités partielles (3, 3' ; 103, 107 ; 303a, 303b), étant entendu que ces deux unités partielles font contact avec les premiers composants (5, 105, 305) de telle sorte que des porteurs de charge électriques sont échangés entre les premiers et les deuxièmes composants ;
où les unités partielles (3, 3' ; 103, 107 ; 303a, 303b) des deuxièmes composants sont réalisées en tant que tôles de contact et au moins un premier composant (5, 105, 305) est relié en plan au moins partiellement avec les unités partielles (3, 3' ; 103, 107 ; 303a, 303b) des deuxièmes composants ; et
au moins une unité partielle (3, 3'; 103, 107; 303a, 303b) des deuxièmes composants est reliée par engagement positif avec les premiers composants et entourée au moins partiellement par les premiers composants (5, 105, 305).

2. Dispositif d'échange de chaleur selon la revendication 1, **caractérisé en ce qu'**au moins un premier composant (5, 105) est conçu de telle sorte qu'il s'étend dans un écartement prédéterminé entre les unités partielles (3, 3' ; 103, 107) du deuxième composant.

3. Dispositif d'échange de chaleur selon la revendication 1 ou 2, **caractérisé en ce que** le premier composant (5, 104, 305) est fabriqué au moins partiellement à partir d'un matériau synthétique qui est choisi dans un groupe qui comprend les matériaux thermoplastiques et duro-plastiques, en particulier le PP (polypropylène) avec suie, le PE (polyéthylène), les polyoléfines et leur famille, l'EVA (éthylène acétate de vinyle) avec suie, le PS (polystyrol) avec suie, le PU (polyuréthanne) ou des matériaux similaires, ou des combinaisons de ces matériaux.

4. Dispositif d'échange de chaleur selon la revendication 1, 2 ou 3, **caractérisé en ce que** le premier composant (5, 104, 305) présente à 0°C une résistance électrique spécifique de 1 Ohm·cm à 300 Ohm·cm, de préférence entre 100 Ohm·cm et 200 Ohm·cm et en particulier de préférence d'environ 160 Ohm·cm.

5. Dispositif d'échange de chaleur selon l'une des revendications 1, 2 ou 3, **caractérisé en ce que** le premier composant (5, 104, 305) présente à 0°C une résistance électrique spécifique de 1 Ohm • cm à 300 Ohm • cm, de préférence entre 1 Ohm • cm et 10 Ohm • cm et en particulier de préférence de 4 Ohm • cm à 6 Ohm • cm.

6. Dispositif d'échange de chaleur selon au moins l'une des revendications précédentes, **caractérisé en ce que** le dispositif comprend un système de logement (2, 101) dans lequel le premier et/ou le deuxième composant sont agencés, étant entendu que ce système de logement (2, 101) est constitué de préférence au moins d'un matériau non conducteur, en particulier d'un matériau plastique non conducteur et en particulier d'un thermoplastique tel que le polyamide, par exemple.

7. Dispositif d'échange de chaleur selon au moins l'une des revendications précédentes, **caractérisé en ce que** le premier composant (5, 104, 305) présente au moins partiellement une forme du type d'une nervure.

8. Dispositif d'échange de chaleur selon au moins l'une des revendications précédentes, **caractérisé en ce que** la superficie de la section et la longueur du premier composant (5, 104, 305) sont choisies de telle sorte qu'une valeur de résistance prédéterminée et/ou une valeur de puissance prédéterminée sont atteintes.

9. Dispositif d'échange de chaleur selon au moins l'une des revendications précédentes, **caractérisé en ce que** les unités partielles (3, 3' ; 103, 107 ; 303a, 303b) du deuxième composant qui sont reliées avec le premier composant (5, 104, 305) sont en connexion électrique avec les pôles d'une source de courant.

10. Dispositif d'échange de chaleur selon la revendication 9, **caractérisé en ce que** la connexion électrique entre au moins une des unités partielles (3, 3' ; 103, 107 ; 303a, 303b) du deuxième composant et la source de courant peut être interrompue et/ou réalisée indépendamment de la connexion entre les autres unités partielles du deuxième composant de telle sorte qu'une boucle de courant, qui comprend en tant qu'éléments au moins la source de courant et/ou les unités partielles du deuxième composant et/ou le premier composant (5, 104, 305), peut être ouverte et fermée.

11. Dispositif d'échange de chaleur selon la revendication 10, **caractérisé en ce que** l'interruption et/ou la réalisation de la connexion électrique entre au moins une des unités partielles (3, 3' ; 103, 107 ; 303a, 303b) et la source de courant est exécutée au moyen de systèmes de commutation mécaniques (8, 8', 8''), en particulier au moyen de commutateurs ou de relais ou de systèmes similaires.

12. Dispositif d'échange de chaleur selon la revendication 10, **caractérisé en ce que** l'interruption et/ou la réalisation de la connexion électrique entre au moins une des unités partielles (3, 3' ; 103, 107 ; 303a, 303b) et la source de courant est exécutée au moyen d'éléments semi-conducteurs, en particulier de transistors de puissance.

13. Dispositif d'échange de chaleur selon au moins l'une des revendications précédentes, **caractérisé en ce que** le premier composant (5, 104, 305) est agencé au moins partiellement dans un angle α prédéterminé par rapport à une direction de circulation principale d'une substance le traversant.

14. Dispositif d'échange de chaleur selon la revendication 13, **caractérisé en ce que** l'angle α qui inclut le premier composant (5, 104, 305) avec la direction de circulation principale de la substance le traversant est situé en termes de grandeur entre 0° et 90°, de préférence entre 0° et 45° et en particulier de préférence entre 0° et 30°.

15. Dispositif d'échange de chaleur selon au moins l'une des revendications précédentes, **caractérisé en ce que** le deuxième composant est muni de systèmes, en particulier des nervures et/ou des filages (112), qui sont appropriés pour chauffer une substance circulant autour de celui-ci.

16. Dispositif d'échange de chaleur selon au moins l'une des revendications précédentes, **caractérisé en ce que** des systèmes supplémentaires (troisième composant 307) sont prévus, lesquels sont appropriés pour chauffer une substance circulant autour de ceux-ci et/ou les traversant, étant entendu que ces systèmes (307) sont réalisés d'une pièce avec au moins une des unités partielles (3, 3' ; 103, 107 ; 303a, 303b) du deuxième composant et/ou du premier composant (5, 104, 305).

17. Dispositif d'échange de chaleur selon au moins l'une des revendications précédentes, **caractérisé en ce que** plusieurs deuxièmes composants sont prévus, lesquels sont traversés par le courant électrique.

18. Dispositif d'échange de chaleur selon au moins l'une des revendications précédentes, **caractérisé en ce qu'**au moins un parmi le premier (5, 104, 305) et/ou le deuxième et/ou le troisième (307) composant est structuré.

19. Dispositif d'échange de chaleur selon au moins l'une des revendications précédentes, **caractérisé en ce que** les composants individuels (5, 104, 305 ; 3, 3' ; 103, 107 ; 303a, 303b ; 307) sont reliés par force les uns aux autres, en particulier serrés au moyen de ressorts.

20. Dispositif d'échange de chaleur selon la revendication 16, **caractérisé en ce que**, aux fins de la réalisation d'une pièce entre les deuxième et troisième composants (307), un matériau de raccordement est agencé, lequel est choisi dans un groupe qui comprend en particulier la colle, le métal d'apport de brasage ou des matériaux similaires.

21. Dispositif d'échange de chaleur selon au moins l'une des revendications précédentes, **caractérisé en ce qu'**au moins une unité partielle (3, 3' ; 103, 107 ; 303a, 303b) du deuxième composant présente des systèmes qui favorisent la jonction mécanique avec le premier composant (5, 104, 305).

22. Dispositif d'échange de chaleur selon la revendication 21, **caractérisé en ce que** les systèmes sont des ouvertures du type de percements (313) à travers au moins une unité partielle (3, 3' ; 103, 107 ; 303a, 303b) du deuxième composant, à travers lesquelles le premier composant (5, 104, 305) passe au moins partiellement.

23. Dispositif d'échange de chaleur selon la revendication 21 ou 22, **caractérisé en ce que** les ouvertures du type de percements (313) se rétrécissent dans la direction des surfaces faisant face au premier composant (5, 104, 305) d'une unité partielle (3, 3' ; 103, 107 ; 303a, 303b) du deuxième composant.

24. Système d'échange de chaleur, **caractérisé en ce que** ce système constitue une installation de climatisation pour un véhicule automobile, étant entendu qu'au moins un dispositif d'échange de chaleur selon au moins l'une des revendications précédentes est agencé dans au moins un conduit de circulation.
